## Europäisches Patentamt
## European Patent Office
## Office européen des brevets

(19)

(11) Numéro de publication: **0 115 222**
**B1**

(12) # FASCICULE DE BREVET EUROPEEN

(45) Date de publication du fascicule du brevet:
**19.11.87**

(51) Int. Cl.⁴: **G 05 B 19/04,** G 05 B 9/03

(21) Numéro de dépôt: **83401700.6**

(22) Date de dépôt: **23.08.83**

(54) **Procédé pour assurer la sécurité du fonctionnement d'un automate programmable et automate pour la mise en oeuvre du procédé.**

(30) Priorité: **20.01.83 FR 8300865**

(43) Date de publication de la demande:
**08.08.84 Bulletin 84/32**

(45) Mention de la délivrance du brevet:
**19.11.87 Bulletin 87/47**

(84) Etats contractants désignés:
**AT BE CH DE GB IT LI LU NL SE**

(56) Documents cités:
**DE - A - 2 850 832**
**DE - B - 2 651 314**
**DE - B - 2 932 270**

(73) Titulaire: **MORS, 4 avenue Velasquez, F-75008 Paris (FR)**

(72) Inventeur: **Desmazières, Jean-Gabriel, 62, rue Blanche, F-75009 Paris (FR)**

(74) Mandataire: **Beauchamps, Georges et al, Cabinet Z.Weinstein 20, avenue de Friedland, F-75008 Paris (FR)**

## Description

La présente invention concerne un procédé pour assurer la sécurité du fonctionnement d'un automate programmable destiné à commander un dispositif utilisateur tel qu'une machine ou installation et un automate pour la mise en œuvre de ce procédé.

On connaît déjà des automates programmables qui sont conçus de telle manière qu'une défaillance simple de n'importe quel composant positionne les sorties de l'automate dans un état prédéterminé. Mais les automates connus de ce type sont réalisés sous forme d'un système redondant dans l'espace, c'est-à-dire sous forme d'un système doublé. Ils ont comme inconvénient majeur d'être coûteux et difficiles à mettre en œuvre et à programmer.

La présente invention a pour but de proposer au problème relatif aux automates programmables une solution qui permet de réaliser les mêmes fonctions de sécurité que les automates connus mais de façon peut coûteuse.

Pour atteindre ce but, la présente invention propose un procédé pour assurer la sécurité du fonctionnement d'un automate programmable, qui est caractérisé en ce que, pour un même état donné aux entrées de l'automate, on fait exécuter par une même unité de traitement telle qu'un microprocesseur le même programme successivement deux fois en utilisant chaque fois un autre bus et prend comme critère d'un fonctionnement correct de l'automate l'identité des deux signaux résultant des deux exécutions successives du programme.

Suivant une caractéristique avantageuse de l'invention, on développe à partir des deux signaux résultant des deux exécutions successives du programme un signal de commande pour le dispositif utilisateur, dont la polarité change au rythme des deux signaux ou reste constante suivant que ces signaux sont identiques ou différents, la différence étant représentative d'un défaut dans le fonctionnement de l'automate.

Suivant une autre caractéristique avantageuse, le programme précité comporte une partie de programme test et une partie de programme utilisateur.

Dans le cadre du procédé selon la présente invention, on effectue dans la partie de programme test un test du microprocesseur en déroulant un programme de test utilisant toutes les instructions de la partie utilisateur, un test des entrées de l'automate comportant la vérification que les entrées ne sont pas activées en l'absence d'un signal extérieur, un test des variables internes comportant une vérification de toutes ces variables, de préférence en les inversant deux fois, et un logiciel interne du système tel que le programme des temporisations-compteurs.

Suivant une autre caractéristique avantageuse de l'invention, on prévoit dans le cas d'un défaut du fonctionnement de l'automate l'arrêt des scrutations de ses entrées la mise à «0» des sorties et, le cas échéant, une alarme.

L'automate suivant la présente invention, pour la mise en œuvre de ce procédé comprend une seule unité de traitement telle qu'un microprocesseur, deux bus commutables en alternance, deux démultiplexeurs chacun associé à un bus, un dispositif générateur d'un signal de sortie de l'automate, ayant deux états réprésentatifs respectivement du fonctionnement correct de l'automate et d'un défaut dans le fonctionnement de celui-ci.

Suivant une caractéristique avantageuse de l'invention, le dispositif générateur comporte un dispositif bistable tel qu'une bascule à deux entrées reliées chacune à une sortie d'un démultiplexeur et susceptible de produire à sa sortie un signal alternatif ou continu suivant que les signaux de sortie appliqués successivement à leurs entrées sont du même état binaire ou différents l'un de l'autre.

Suivant une autre caractéristique de l'invention, la mémoire programme est partagée en deux zones, à savoir une zone test et une zone utilisateur.

Suivant encore une caractéristique avantageuse de l'invention, l'automate comporte un décodeur de préférence câblé pour l'étalonnage de l'unité de traitement, qui est relié aux sorties de test de cette unité.

Dans le cadre de la présente invention, le dispositif multiplexeur d'entrée peut être réalisé sous une forme à entrées doubles scrutées alternativement ou une forme à entrées simples qui sont adaptées pour être alimentées en dynamique par des sorties de l'automate.

Suivant une caractéristique avantageuse de l'invention, le dispositif mémoire de données comporte deux mémoires de données utilisées alternativement.

Il est encore avantageux d'utiliser dans le dispositif générateur du signal de sortie de l'automate un transformateur dont l'enroulement primaire est relié au dispositif bistable à deux entrées, ce transformateur produisant à la sortie de son enroulement secondaire un état «0» lorsque les deux signaux d'entrée du dispositif bistable sont différents l'un de l'autre.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention et dans lesquels:

La figure 1 montre sous forme d'un schéma-bloc un mode de réalisation d'un automate de sécurité selon la présente invention, et

La figure 2 illustre le principe de fonctionnement d'un automate selon l'invention.

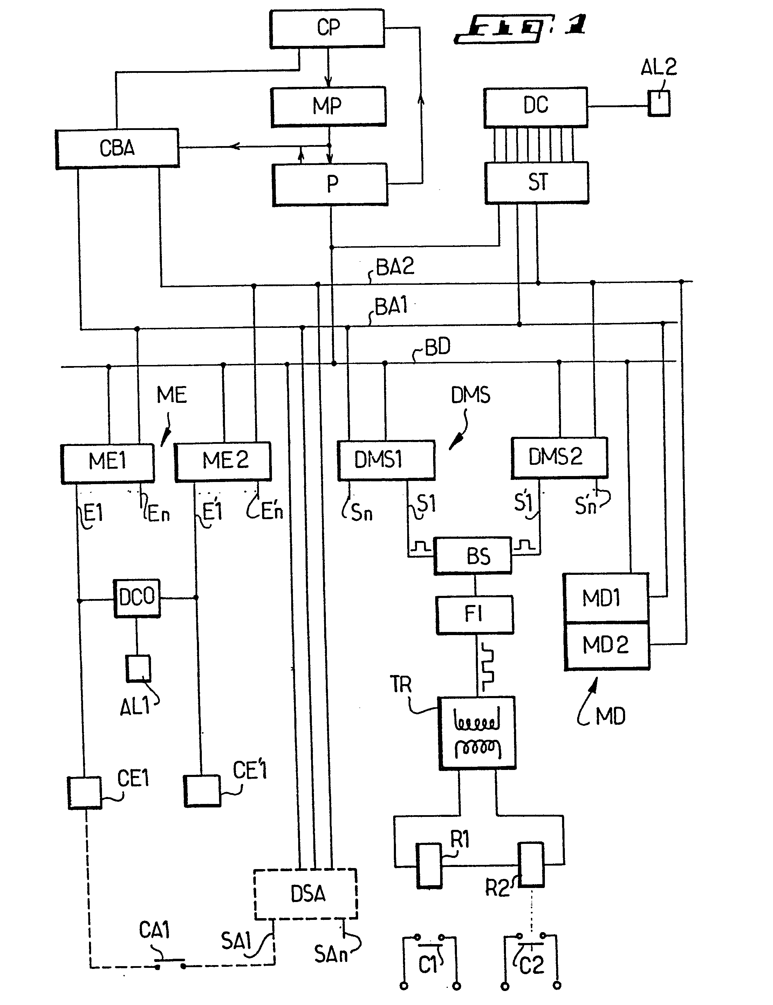

La figure 1 montre à titre d'exemple un automate programmable de sécurité selon la présente invention, qui comprend essentiellement une unité de traitement formée par un microprocesseur P auquel sont associés comme cela est représenté, une mémoire programme MP, un compteur programme CP, deux bus d'adresse BA1 et BA2, un bus de donnée BD, un commutateur des bus d'adresse CBA, un dispositif multiplexeur d'entrée ME et un dispositif démultiplexeur de sortie DMS ainsi qu'un dispositif mémoire de données MD. De plus, le microprocesseur comporte un décodeur câblé DC relié à des sorties test ST du microprocesseur, représentées sous forme d'un bloc séparé.

Comme le montre la figure 1, le dispositif démutliplexeur de sortie DMS comporte deux démultiplexeurs DMS1, DMS2 reliés d'une part au bus de donnée BD, et, d'autre part, respectivement aux bus d'adresse BA1 et BA2. Les démultiplexeurs DMS1, DMS2 comportent chacun un certain nombre de sorties parallèles identifiées respectivement par S1 ... Sn et S1' ... Sn'. Les sorties correspondantes des deux multiplexeurs sont reliées, comme cela est montré à la figure 1 pour les sorties S1, S1', aux deux entrées d'un dispositif bistable tel qu'une bascule BS. La sortie de cette dernière est reliée par l'intermédiaire d'un filtre passe-bande FI à l'enroulement primaire d'un transformateur TR dont le circuit de l'enroulement secondaire comporte deux relais R1, R2 destinés à commander respectivement par un contact C1, C2 la fermeture ou l'ouverture d'un circuit d'alimentation en énergie électrique du système utilisateur non représenté.

Concernant le dispositif multiplexeur d'entrée ME, on constate que la figure 1 illustre deux versions de réalisation, une version à entrées doubles illustrée en traits pleins et une deuxième version à entrées simples indiquée en traits interrompus. Dans le premier mode de réalisation, deux multiplexeurs d'entrée ME1, ME2 sont prévus qui comportent des entrées E1 ... En et E1' ... En'. Comme le montre la figure 1 pour les entrées correspondantes E1, E1', un détecteur de coïncidence DCO est associé à chaque paire d'entrées. Les entrées doubles, telles que les entrées E1, E1' sont adaptées pour être scrutées alternativement. Dans le deuxième mode de réalisation, les entrées simples peuvent être alimentées en énergie à partir des sorties SA1 ... SAn d'un dispositif de sortie DSA du microprocesseur. A cette fin, le dispositif DSA est relié, d'une part, aux bus d'adresse BA1, BA2 et, d'autre part au bus de donnée BD. La liaison entre les différentes sorties SA1 ... SAn et les entrées simples E1 ... En peut être effectuée à l'aide d'un ensemble de contacts dont seulement le contact CA1 est représenté.

Relativement à la mémoire de programme MP, il est à noter qu'elle est partagée en deux zones, à savoir en des zones TEST et UTILISATEUR. Quant au compteur programme CP, il est agencé pour pouvoir adresser la mémoire MP et agir sur le commutateur des bus d'adresse CBA pour réaliser indépendamment du programme la commutation des bus BA1, BA2 sous l'effet d'un signal d'horloge provenant du microprocesseur P. Ce dernier peut être un microprocesseur en tranches de 4 bits microprogrammé pour une question de vitesse et/ou un microprocesseur à 1 bit éventuellement.

Pour compléter la description de la figure 1, on constate que le bloc ST des sorties de test du microprocesseur est relié aux bus d'adresse BA1, BA2 et au bus de donnée BD. Un certain nombre de dispositifs de signalisation alarme sont prévus, tels que les dispositifs AL1 et AL2 associés respectivement au dispositif de coïncidence DCO et au décodeur câblé DC. A chaque entrée de multiplexeur E1 ... En; E1' ... En' est associé un capteur dont les capteurs DE1 et DE1' sont représentés.

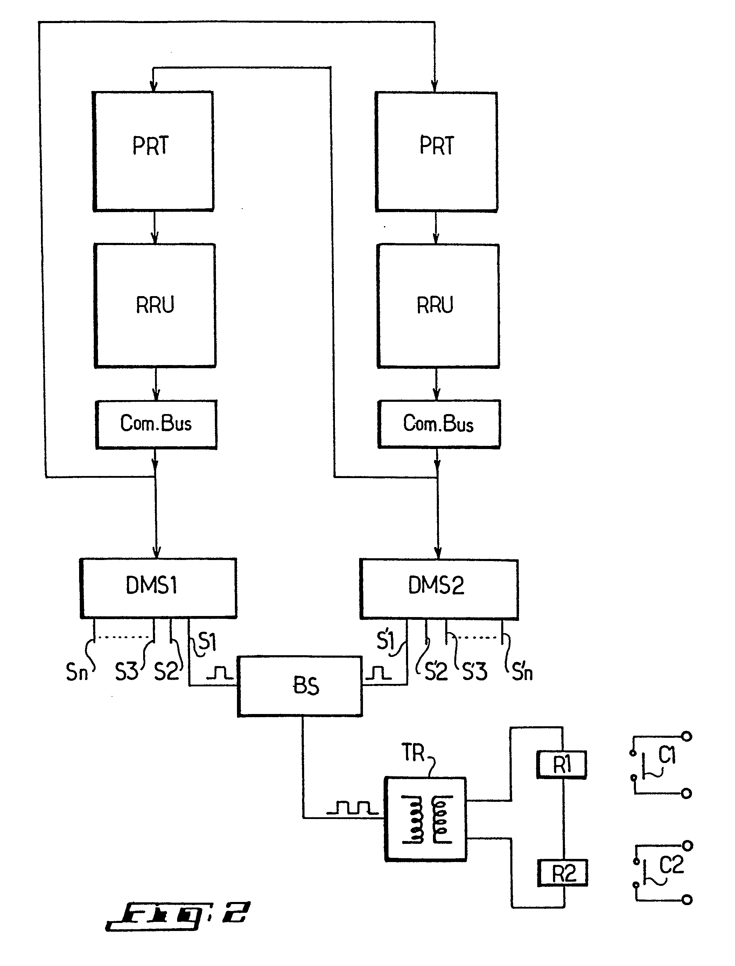

La description de l'automate représentée à la figure 1 permet de comprendre le principe de fonctionnement d'un automate de sécurité selon la présente invention, qui est illustré à la figure 2.

Le principe est de faire exécuter, pour un même état de données aux entrées de l'automate, par une même unité de traitement, à savoir le microprocesseur P, deux fois successivement le même programme en utilisant alternativement deux bus, à savoir les bus BA1, BA2.

Comme le montre la figure 2, le programme est divisé en deux parties:

– une partie utilisateur PRU programmée par l'utilisateur de l'automate utilisant le langage classique des automates (booléen-grafcet);

– une partie test PRT. Dans cette partie déroulée à chaque exécution du programme, c'est-à-dire à chaque scrutation des entrées, on effectue les tests suivants:

a) on effectue un test du microprocesseur. A cette fin on déroule un programme type, utilisant toutes les instructions du microprocesseur et délivrant une série par exemple de huit sorties (bloc sortie test ST). Ces sorties doivent prendre des valeurs prédéterminées, qui sont vérifiées par un décodeur câblé, à savoir le décodeur DC;

b) on effectue un test des entrées. On vérifie que les entrées ne sont pas activées en l'absence de signal extérieur. Ce signal extérieur est appliqué en principe par une sortie SA1 ... SAn de l'automate;

c) on effectue un test des variables internes. Celles-ci sont toutes vérifiées. De préférence elles sont inversées deux fois;

d) on effectue le logiciel interne du système, tel que le programme des temporisations-compteurs.

A la première exécution du programme comportant les programmes TEST et UTILISATEUR PRT et PRU, après scrutation des capteurs d'entrée CE1 ... CEn, on utilise par exemple le bus BA1. A la fin de la première exécution du programme, l'automate produit une impulsion de sortie que le démultiplexeur DMS1 transmet à la sortie correspondante de la bascule BS et on provoque le changement de bus à l'aide du compteur programme CP.

On remet également à zéro le décodeur câblé DC et les alimentations des capteurs d'entrée s'il s'agit de la version à entrées simples du multiplexeur d'entrée ME. La deuxième exécution du programme ou scrutation démarre alors adressant les mêmes entrées dans la version à entrées simples du multiplexeur d'entrée ou les capteurs d'entrée CE1' ... CEn' dans la version à entrées doubles. On utilise maintenant le bus BA2 et le démultiplexeur de sortie DMS2. A la fin de cette deuxième exécution du programme, l'automate produit à nouveau une impulsion de sortie que le démultiplexeur DMS2 applique à l'autre entrée de la bascule BS. Si cette deuxième impulsion est identique à la première, c'est-à-dire présente le même état binaire, la position de la bascule BS est inversée. Dans le cas contraire, c'est-à-dire lorsque l'état de la deuxième impulsion est différent de celui de la première, la bascule reste dans sa position. Par conséquent, si la bascule délivre un signal alternatif à la demi-fréquence des exécutions du programme ou des scrutations, l'automate fonctionne correctement. Ce signal passe à travers le filtre FI ou directement au transformateur TR et commande les bobines des deux relais R1, R2 montés en série ou en parallèle dans le circuit secondaire du transformateur. Par contre, tout défaut au niveau d'une des deux chaînes utilisées pendant l'exécution du programme, va forcer la bascule dans la position «0» ou «1». Dans de telles circonstances le transformateur ne peut pas transmettre de l'énergie aux relais. Autrement dit, le transformateur arrête l'information et une alarme est engendrée. On constate que les sorties de l'automate sont alors à un état prédéterminé.

Il est encore à noter que pour un automate programmable à 40 entrées/sorties le déroulement du programme TEST et du programme UTILISATEUR se fait chaque fois dans 5 millisecondes. La fréquence de sortie est donc de 50 cycles fixes. Grâce à l'exécution de chaque programme dans un délai de temps si bref, la scrutation successive pour un état donné aux entrées de l'automate est réalisable sans que cela soit préjudiciable pour le dispositif utilisateur. Ce dernier pourrait être toute machine ou installation où l'on doit assurer la sécurité des personnes et du matériel. A titre d'exemple on pourrait citer des stations d'énergie, des presses, des cisailles, des systèmes de transport ou analogues.

Il ressort de ce qui précède que l'automate proposé par l'invention possède une structure simple et est peu coûteux du fait qu'il utilise à la fois une redondance spatiale et une redondance temporelle, c'est-à-dire «dynamique». Le rôle de filtre passebande FI est de rejeter toute information à fréquence différente de la fréquence de scrutation ou d'un multiple entier de celle-ci.

## Revendications

1. Procédé pour assurer la sécurité du fonctionnement d'un automate programmable destiné à commander un dispositif utilisateur, caractérisé en ce que, pour un même état donné aux entrées (CE1 ... CEn) de l'automate on fait exécuter par une même unité de traitement (P) telle qu'un microprocesseur le même programme (PRT, PRU) successivement deux fois en utilisant chaque fois un autre bus (BA1, BA2) et on prend comme critère d'un fonctionnement correct de l'automate l'identité des deux signaux résultant des deux exécutions successives du programme.

2. Procédé selon la revendication 1, caractérisé en ce que l'on développe à partir des deux signaux résultant des deux exécutions successives du programme (PRT, PRU), un signal de commande pour le dispositif utilisateur, dont la valeur change au rythme des deux signaux ou reste constante suivant que ces signaux sont identiques ou différents, la différence étant représentative d'un défaut dans le fonctionnement de l'automate.

3. Procédé selon la revendication 1 ou 2, caractérisé en ce que le programme précité comporte une partie test (PRT) précédant une partie utilisateur (PRU).

4. Procédé selon la revendication 3, caractérisé en ce que l'on effectue dans la partie test (PRT) du programme un test de l'unité de traitement (P) en déroulant un programme de test utilisant toutes les instructions de la partie utilisateur (PRU) du programme.

5. Procédé selon l'une des revendications 3 ou 4, caractérisé en ce que l'on effectue dans la partie test (PRT) du programme un test des entrées (CE1 ... CEn; CE1' ... CEn') de l'automate comportant la vérification que les entrées ne sont pas activées en l'absence d'un signal extérieur.

6. Procédé selon l'une des revendications 3 à 5, caractérisé en ce que l'on effectue dans la partie test (PRT) du programme un test des variables internes, comportant une vérification de toutes les variables, de préférence en les inversant deux fois.

7. Procédé selon l'une des revendications 2 à 6, caractérisé en ce que l'on effectue dans la partie test (PRT) du programme un logiciel interne du système tel que le programme des temporisations-compteurs.

8. Procédé selon l'une des revendications précédentes, caractérisé en ce que l'on prévoit dans le cas d'un défaut de fonctionnement de l'automate l'arrêt de la scrutation de ses entrées et la mise à l'état zéro des sorties et une alarme.

9. Automate programmable de sécurité pour la mise en œuvre du procédé selon les revendications 1 à 8, comprenant un dispositif d'unité de traitement, un dispositif mémoire programme et un dispositif mémoire de données, des interfaces d'entrée et de sortie comportant des multiplexeurs et démultiplexeurs et des moyens formant bus, caractérisé en ce qu'il comprend une seule unité de traitement (P) telle qu'un microprocesseur, deux bus (BA1, BA2) commutables en alternance, deux démultiplexeurs de sortie (DMS1, DMS2) chacun associé à un bus (BA1, BA2), un dispositif générateur (BS, TR) d'un signal de sortie de l'automate, ayant deux états représentatifs respectivement du fonctionnement correct de l'automate et d'un défaut dans le fonctionnement de celui-ci.

10. Automate selon la revendication 9, caractérisé en ce que le dispositif générateur (BS, TR) comporte un dispositif bistable (BS) tel qu'une bascule à deux entrées reliées chacune à une sortie (S1 ... Sn; S1' ... Sn') et produisant à sa sortie un signal alternatif ou continu suivant que les signaux de sortie appliqués à ses entrées sont du même état binaire ou différents l'un de l'autre.

11. Automate selon l'une des revendications 9 ou 10, caractérisé en ce qu'il comprend un compteur programme (CP) adapté pour adresser une mémoire programme (MP) et réaliser la commutation des bus (BA1, BA2).

12. Automate selon l'une des revendications 9 à 11, caractérisé en ce que la mémoire programme (MP) est partagée en deux parties, une partie test (PRT) et une partie utilisateur (PRU).

13. Automate selon l'une des revendications 9 à 12, caractérisé en ce qu'il comporte un décodeur de préférence câblé pour l'étalonnage de l'unité de traitement (P), qui est relié aux sorties de test (ST) de l'unité de traitement.

14. Automate selon l'une des revendications 9 à 13, caractérisé en ce que le dispositif multiplexeur d'entrée (ME) est réalisé sous forme d'un dispositif à entrés doubles (E1 ... En; E1' ... En'), scrutées alternativement.

15. Automate selon l'une des revendications 9 à 13, caractérisé en ce que le dispositif multiplexeur d'entrée (ME) est réalisé sous forme d'un dispositif à entrées simples (E1 ... En) adapté pour être alimenté en énergie par des sorties d'alimentation d'entrée (SA1 ... SAn) de l'automate.

16. Automate selon la revendication 14, caractérisé en ce qu'à chaque paire d'entrées (E1, E1' ... En, En') est associé un détecteur de coïncidence (DCO).

17. Automate selon l'une des revendications 9 à 16, caractérisé en ce que le dispositif mémoire de données (MD) comporte deux mémoire de données (ME1, ME2) utilisées alternativement.

18. Automate selon l'une des revendications 9 à 17, caractérisé en ce que le dispositif générateur du signal de sortie de l'automate comprend un transformateur (TR) dont l'enroulement primaire est relié au dispositif bistable (BS) à deux entrées, ce transformateur produisant à la sortie de son enroulement secondaire un état «0» lorsque les deux signaux d'entrée du dispositif bistable sont différents l'un de l'autre.

19. Automate selon l'une des revendications 9 à 18, caractérisé en ce qu'il est adapté pour que l'exécution des parties test (PRT) et utilisateur (PRU) du programme se fasse chacune dans un intervalle de temps de l'ordre de quelques millisecondes, par exemple 5 millisecondes.

20. Automate selon l'une des revendications 9 à 19, caractérisé en ce qu'il comporte un moyen (FI) tel qu'un filtre passe-bande qui n'accepte que les signaux à la fréquence de scrutation ou un des multiples entiers de celle-ci.

21. Automate selon l'une des revendications 9 à 20, caractérisé en ce que le dispositif générateur (BS, TR) du signal de sortie de l'automate est adapté pour produire un signal de sortie «0» en cas d'un défaut dans le fonctionnement de l'automate.

**Patentansprüche**

1. Verfahren zur Sicherung der Betriebssicherheit eines zur Steuerung einer Anwendervorrichtung bestimmten programmierbaren Automaten, dadurch gekennzeichnet, dass bei einem selben gegebenen Zustand an den Eingängen (CE1, ... CEn) des Automaten man durch eine selbe Verarbeitungseinheit (P) wie einen Mikroprozessor dasselbe Programm (PRT, PRU) aufeinanderfolgend zweimal durchführen lässt jeweils unter Verwendung einer anderen Sammelleitung (BA1, BA2) und man als Kriterium eines richtigen Betriebes des Automaten die Übereinstimmung beider sich aus den beiden aufeinanderfolgenden Durchführungen des Programms ergebenden Signale nimmt.

2. Verfahren nach Anspruch 1, dadurch gekennzeichnet, dass ausgehend von den beiden sich aus den beiden aufeinanderfolgenden Durchführungen des Programms (PRT, PRU) ergebenden Signale man ein Steuersignal für die Anwendervorrichtung entwickelt, dessen Wert sich mit dem Rhythmus der beiden Signale ändert oder konstant bleibt, je nachdem diese Signale identisch oder unterschiedlich sind, wobei der Unterschied einen Fehler in dem Betrieb des Automaten darstellt.

3. Verfahren nach Anspruch 1 oder 2, dadurch gekennzeichnet, dass das vorgenannte Programm einen einen Anwenderteil (PRU) vorangehenden Prüfungsteil (PRT) aufweist.

4. Verfahren nach Anspruch 3, dadurch gekennzeichnet, dass man in dem Prüfungsteil (PRT) des Programms eine Prüfung der Verarbeitungseinheit (P) bei Ablauf eines sämtliche Befehle des Anwenderteils (PRU) des Programms verwendenden Prüfungsprogramms ausführt.

5. Verfahren nach einem der Ansprüche 3 oder 4, dadurch gekennzeichnet, dass in dem Prüfungsteil (PRT) des Programms man eine Prüfung der Eingänge (CE1, ..., CEn; CE1', ..., CEn') des Automaten ausführt, welche den Nachweis, dass in der Abwesenheit eines äusseren Signals die Eingänge nicht aktiviert werden, umfasst.

6. Verfahren nach einem der Ansprüche 3 bis 5, dadurch gekennzeichnet, dass in dem Prüfungsteil (PRT) des Programms man eine eine Überprüfung sämtlicher Variabeln umfassende Prüfung der inneren Variabeln ausführt, vorzugsweise indem man sie zweimal umkehrt.

7. Verfahren nach einem der Ansprüche 2 bis 6, dadurch gekennzeichnet, dass in dem Prüfungsteil (PRT) des Programms man ein inneres Software des Systems wie das Programm der Verzögerungen-Zähler ausführt.

8. Verfahren nach einem der vorangehenden Ansprüche, dadurch gekennzeichnet, dass in dem Fall eines Betriebsfehlers des Automaten man das Stillsetzen der Durchsuchung seiner Eingänge und das Setzen der Ausgänge auf den Nullzustand und einen Alarm vorsieht.

9. Programmierbarer Sicherheitsautomat zur Durchführung des Verfahrens gemäss den Ansprüchen 1 bis 8, mit einer Verarbeitungseinheitvorrichtung, einer Programmspeichervorrichtung und einer Datenspeichervorrichtung, wobei Eingangs- und Ausgangsschnittstellen Multiplexer und Demultiplexer und Sammelleitungmittel aufweisen, dadurch gekennzeichnet, dass er eine einzige Verarbeitungseinheit (P) wie einen Mikroprozessor, zwei wechselbar schaltbare Sammelleitungen (BA1, BA2), zwei jeweils einer Sammelleitung (BA1, BA2) zugeordnete Ausgangsdemultiplexer (DMS1, DMS2), eine ein Ausgangssignal des Automaten erzeugende Vorrichtung (BS, TR) mit zwei jeweils den fehlerfreien Betrieb des Automaten und einen Fehler bei dem Betrieb desselben darstellenden Zuständen, aufweist.

10. Automat gemäss Anspruch 9, dadurch gekennzeichnet, dass die Erzeugervorrichtung (BS, TR) eine bistabile Vorrichtung (BS) wie eine Kippschaltung mit zwei jeweils an einen Ausgang (S1, ..., Sn; S1', ..., Sn') angeschlossene Eingänge aufweist, die an ihrem Ausgang ein Wechseloder Gleichsignal erzeugt, je nachdem die an ihren Eingängen angelegten Ausgangssignale in demselben binären Zustand oder voneinander unterschiedlich sind.

11. Automat nach einem der Ansprüche 9 oder 10, dadurch gekennzeichnet, dass er einen für das Adressieren eines Programmspeichers (MP) und die Durchführung des Schaltens der Hauptleitungen (BA1, BA2) angepassten Programmzähler umfasst.

12. Automat nach einem der Ansprüche 9 bis 11, dadurch gekennzeichnet, dass der Programmspeicher (MP) in zwei Teile, einen Prüfungsteil (PRT) und einen Verwenderteil (PRU), geteilt ist.

13. Automat nach einem der Ansprüche 9 bis 12, dadurch gekennzeichnet, dass er einen vorzugsweise festverdrahteten Entschlüsseler zum Eichen der Verarbeitungseinheit (P) aufweist, der an die Prüfungsausgänge (ST) der Verarbeitungseinheit angeschlossen ist.

14. Automat nach einem der Ansprüche 9 bis 13, dadurch gekennzeichnet, dass die Eingangsmultiplexervorrichtung (ME) als eine Vorrichtung mit wechselweise durchsuchten Doppeleingängen (E1, ..., En; E1', ..., En') ausgebildet ist.

15. Automat nach einem der Ansprüche 9 bis 13, dadurch gekennzeichnet, dass die Eingangsmultiplexervorrichtung (ME) als eine Vorrichtung mit Einzeleingängen (E1, ..., En) ausgebildet ist, die für die Speisung mit Energie über Eingangsspeiseausgänge (SA1, ..., SAn) des Automaten angepasst ist.

16. Automat gemäss Anspruch 14, dadurch gekennzeichnet, dass jedem Paar von Eingängen (E1, E1', ..., En, En') ein Übereinstimmungsdetektor (DCO) zugeordnet ist.

17. Automat nach einem der Ansprüche 9 bis 16, dadurch gekennzeichnet, dass die Datenspeichervorrichtung (MD) zwei wechselweise verwendete Datenspeicher (ME1, ME2) aufweist.

18. Automat nach einem der Ansprüche 9 bis 17, dadurch gekennzeichnet, dass die das Ausgangssignal des Automaten erzeugende Vorrichtung einen Transformator (TR) umfasst, dessen Primärwicklung an die bistabile Vorrichtung (BS) mit zwei Eingängen angeschlossen ist, wobei dieser Transformator an dem Ausgang seiner Sekundärwicklung einen Zustand «0» erzeugt, wenn die beiden Eingangssignale der bistabilen Vorrichtung voneinander unterschiedlich sind.

19. Automat nach einem der Ansprüche 9 bis 18, dadurch gekennzeichnet, dass er angepasst ist, damit die Durchführung des Prüfungsteils (PRT) und des Verwenderteils (PRU) des Programms jeweils in einer Zeitspanne der Grössenordnung von einigen Millisekunden, z.B. 5 Millisekunden stattfindet.

20. Automat nach einem der Ansprüche 9 bis 19, dadurch gekennzeichnet, dass er ein Mittel (FI) wie ein Bandpassfilter, das nur die Signale mit der Durchsuchungsfrequenz oder einer der ganzzahligen Vielfachen derselben annimmt, aufweist.

21. Automat nach einem der Ansprüche 9 bis 20, dadurch gekennzeichnet, dass die das Ausgangssignal des Automaten erzeugende Vorrichtung (BS, TR) für die Erzeugung eines Ausgangssignals «0» in dem Fall eines Fehlers in dem Betrieb des Automaten angepasst ist.

## Claims

1. Method for ensuring the reliability of a programmable automatic device adapted to control a utilizing device, characterized in that, for a same given state at the inputs (CE1, ..., CEn) of the automatic device, one has the same programme (PRT, PRU) carried out by a same treatment unit (P) such as a microprocessor successively twice by each time using another bus (BA1, BA2) and one takes as a criterion of a correct operation of the automatic device the identity of both signals resulting from both successive performances of the programme.

2. Method according to claim 1, characterized in that one develops from both signals resulting from both successive performances of the programme (PRT, PRU) a control signal for the utilizer device the value of which changes to the rhythm of both signals or remains constant according as these signals are identical or different, the difference being representative of a defect in the operation of the automatic device.

3. Method according to claim 1 or 2, characterized in that the aforesaid programme comprises a test portion (PRT) preceding a utilizer portion (PRU).

4. Method according to claim 3, characterized in that one effects in the test portion (PRT) of the programme a test of the treatment unit (P) by proceeding with a test programme using all the instructions of the utilizer portion (PRU) of the programme.

5. Method according to one of claims 3 or 4, characterized in that one effects in the test portion (PRT) of the programme a test of the inputs (CE1, ..., CEn; CE1′, ..., CEn′) of the automatic device comprising the checking that the inputs are not activated in the absence of an outer signal.

6. Method according to one of claims 3 to 5, characterized in that one effects in the test portion (PRT) of the programme a test of the inner variables comprising a checking of all the variables preferably by inverting same twice.

7. Method according to one of claims 2 to 6, characterized in that one effects in the test portion (PRT) of the programme an inner software of the system such as the programme of the time-delayings-counters.

8. Method according to one of the foregoing claims, characterized in that one provides in the case of a defect in the operation of the automatic device the stop of the scanning of its inputs and the setting in the zero state of the outputs and an alarm.

9. Programmable safety automatic device for carrying out the method according to claims 1 to 8, comprising a treatment unit device, a programme storage device and a data storage device, the input and output interfaces comprising multiplexers and demultiplexers and bus means, characterized in that it comprises one single treatment unit (P) such as a microprocessor, two alternatingly switchable bus bars (BA1, BA2), two output demultiplexers (DMS1, DMS2) each one associated with a bus (BA1, BA2), a generating device (BS, TR) for an output signal of the automatic device having two states representative of the correct operation of the automatic device and of a defect in the operation thereof, respectively.

10. Automatic device according to claim 9, characterized in that the generating device (BS, TR) comprises a bistable device (BS) such as a flip-flop circuit with two inputs each one connected to an output (S1, ..., Sn; S1′, ..., Sn′) and producing at its output an alternating or continuous signal according as the output signals applied to its inputs are of the same binary state or different from each other.

11. Automatic device according to one of claims 9 or 10, characterized in that it comprises a programme counter (CP) adapted for addressing a programme memory (MP) and effecting the switching of the bus (BA1, BA2).

12. Automatic device according to one of claims 9 to 11, characterized in that the programme memory (MP) is divided into two portions, one test portion (PRT) and a utilizer portion (PRU).

13. Automatic device according to one of claims 9 to 12, characterized in that it comprises a preferably wired decoder for the calibration of the treatment unit (P) which is connected to the test outputs (ST) of the treatment unit.

14. Automatic device according to one of claims 9 to 13, characterized in that the input multiplexer device (ME) is made as a device with alternatingly scanned double inputs (E1, ..., En; E1′, ..., En′).

15. Automatic device according to one of claims 9 to 13, characterized in that the input multiplexer device (ME) is made as a device with single inputs (E1, ..., En) adapted to be fed with energy through input feed outputs (SA1, ..., SAn) of the automatic device.

16. Automatic device according to claim 14, characterized in that with each pair of inputs (E1, E1′, ..., En, En′) is associated a coincidence detector (DCO).

17. Automatic device according to one of claims 9 to 16, characterized in that the data storage device (MD) comprises two alternatingly used data memories (ME1, ME2).

18. Automatic device according to one of claims 9 to 17, characterized in that the device generating the output signal of the automatic device comprises a transformer (TR) the primary winding of which is connected to the bistable device (BS) with two inputs, this transformer producing at the output of its secondary winding a «0» state when both input signals of the bistable device are different from one another.

19. Automatic device according to one of claims 9 to 18, characterized in that it is adapted for the performance of the test (PRT) and utilizer (PRU) portions of the programme be each one made within a time interval of the order of a few milliseconds, for instance 5 milliseconds.

20. Automatic device according to one of claims 9 to 19, characterized in that it comprises a means (FI) such as a band pass filter which only accepts the signals at the scanning frequency or one of the multiple integers of the latter.

21. Automatic device according to one of claims 9 to 20, characterized in that the generating device (BS, TR) for the output signal of the automatic device is adapted to produce an output signal «0» in case of a defect in the operation of the automatic device.

Fig. 1

Fig. 2